# FASCICULE DE BREVET EUROPEEN

(11) **EP 2 581 516 B1**
(45) Date de publication et mention de la délivrance du brevet: **03.12.2014**
(21) Numéro de dépôt: 12306240.8
(22) Date de dépôt: 11.10.2012
(51) Int. Cl.: E04B 9/18, E04B 9/20

(54) **Dispositif de fixation d'ossatures plafonds ou autres accessoires sur les talons d'une poutrelle béton**
Befestigungsmittel zur Befestigung von Deckenstrukturen oder anderen Zusatzbauteilen an den Kanten eines Betonträgers
Device for attaching ceiling frameworks or other accessories to the edges of a concrete beam

(30) Priorité: 12.10.2011 FR 1103126
(43) Date de publication de la demande: 17.04.2013
(73) Titulaire: Chabanne SAS, 42330 Saint-Galmier (FR)
(72) Inventeur: Chabanne, Dominique, 42210 Saint Cyr Les Vignes (FR)
(74) Mandataire: Thivillier, Patrick

(56) Documents cités:
- WO-A1-2005/111334
- FR-A1- 2 727 451
- FR-A1- 2 937 987

## Description

La présente invention concerne un dispositif pour permettre la fixation d'ossatures plafonds ou autres accessoires sous des poutrelles béton au moyen de suspentes à visser latéralement ou de tiges filetées.

Le remplacement des hourdis en aggloméré de maçonnerie par des hourdis légers en matière thermoplastique ou en aggloméré de bois a considérablement limité le travail physique du maçon.

Cette évolution connait un essor rapide.

La fixation des ossatures plafonds sous les ouvrages ne peut plus être réalisée, comme par le passé en se fixant aux hourdis maçonnés et il y a interdiction de percer les poutrelles.

Il faut donc développer une pièce d'accroche spécifique. Certaines sociétés ont déjà développé des dispositifs pour supporter une ossature plafond.

Une des pièces les plus répandues, ne reçoit que des suspentes spécifiques et sa fabrication, très coûteuse, la rend peu compétitive.

Un autre modèle serre le talon de la poutrelle béton au moyen de la même tige filetée qui recevra la fixation de l'ossature. Il ne permet pas l'utilisation de suspentes plates.

En conséquence, il convient selon l'utilisation de suspentes ou de tiges filetées, de choisir le modèle adapté.

D'autre part, les modèles existants ne peuvent se fixer que sur des poutrelles béton adaptées au modèle spécifique utilisé en raison de la variation de l'épaisseur des talons de poutrelles trop importante et pas suffisamment calibrée.

FR 2 937 987 décrit un dispositif selon la préambule de la revendication 1.

Le dispositif selon l'invention permet de remédier à ces différents inconvénients.

Le problème que se propose de résoudre l'invention a pour objectif de pouvoir fixer un étrier sur des talons de différentes épaisseurs et de pouvoir adapter sur l'étrier une tige filetée.

Pour un résoudre un tel problème, il a été conçu et mis au point un dispositif conforme aux caractéristiques de la revendication 1.

Il ressort de ces caractéristiques que le dispositif autorise une amplitude permettant d'accepter les variations d'épaisseur des talons des poutrelles qui existent sur le marché entre 38 et 45mm selon les fabrications.

Le dispositif permet l'adaptation à la majorité des talons de poutrelles.

Il se fixe sur un seul côté de celle-ci et peut s'utiliser en cas de poutrelles juxtaposées.

Dans une forme de réalisation, l'étrier est réalisé en tôle galvanisée découpée, pliée, d'une épaisseur de l'ordre de 1,5 mm dans lequel sont pratiquées deux nervures de renfort. En partie haute, l'étrier présente deux dents ou griffes pour faciliter l'accrochage sur le dessus du talon de la poutrelle et en opposition, en partie basse, un trou épaulé pour le passage d'une vis autotaraudeuse devant assurer le serrage. La partie latérale, de l'étrier est équipée d'ergots ou de languettes retournés permettant son positionnement, en créant un espace libre comme indiqué.

Le dispositif permet la fixation aussi bien de suspentes à visser latéralement que de tiges filetées pour la fixation des suspentes, cavaliers, pivots ou accessoires appropriés à son utilisation.

L'invention est exposée ci-après plus en détail à l'aide des figures des dessins dans lesquelles :

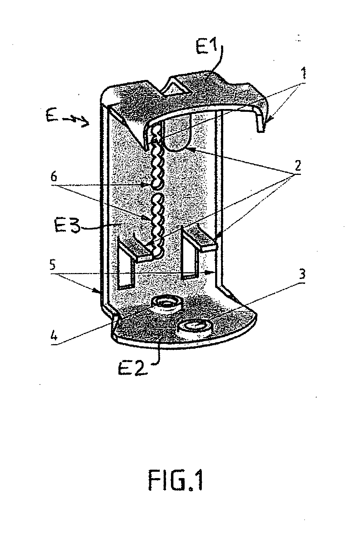

- la figure 1 est une vue en perspective de l'étrier,

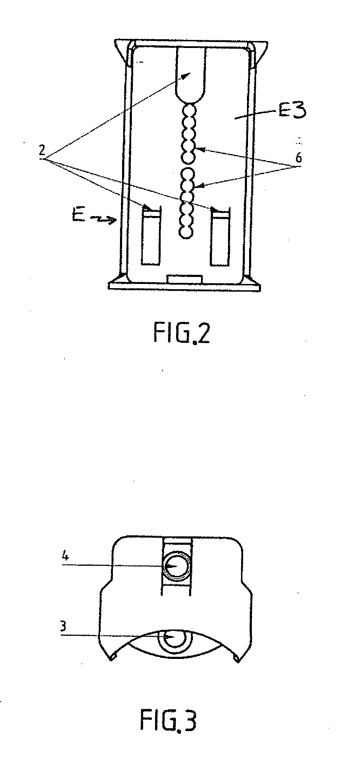

- la figure 2 est une vue de face de l'étrier
- la figure 3 est une vue de dessus correspondant à la figure 2

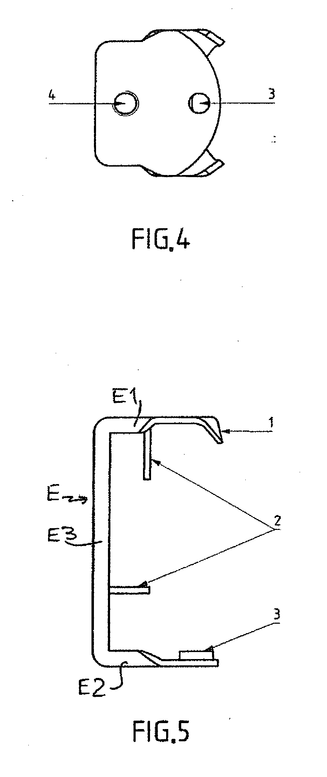

- la figure 4 est une vue de dessous de l'étrier
- la figure 5 est une vue de côté de l'étrier
- les figures 6, 7 et 8 sont des vues en perspective montrant le montage et la fixation de l'étrier sur le talon d'une poutrelle, à la figure 6 détaillée est équipée d'une suspente, à la figure 7, l'étrier est équipé d'une tige à crochet, et à la figure 8, l'étrier est équipé d'une tige filetée.

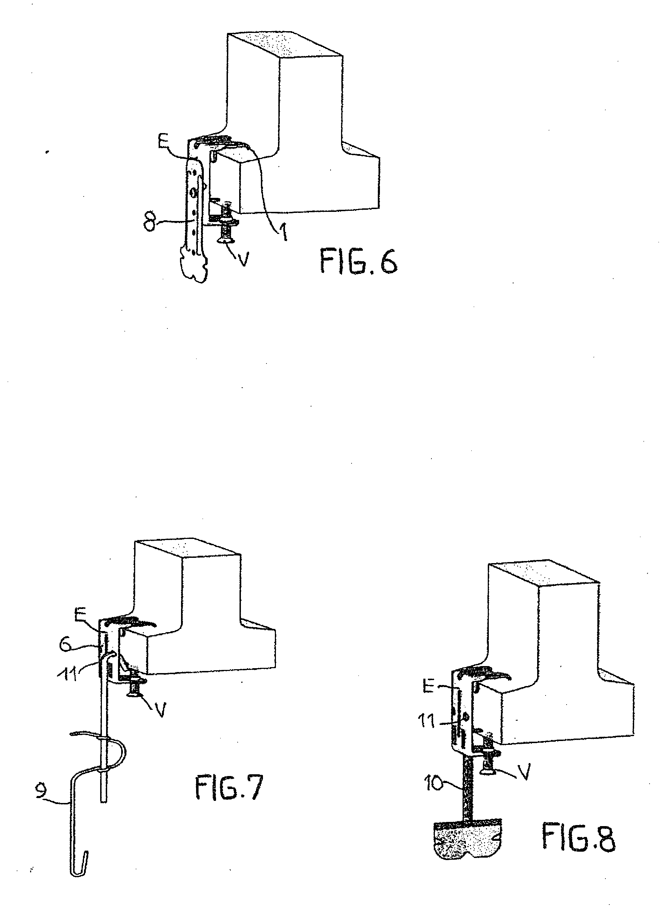

   Les figures 6 et 7 ne décrivent pas un dispositif selon l'invention.

L'étrier désigné dans son ensemble par (E) présente une partie supérieure (E1) coopérant avec le dessus du talon de la poutrelle considérée et une partie inférieure (E2) pour la fixation de l'ensemble de l'étrier comme il sera indiqué dans la suite de la description. Les parties supérieure (E1) et inférieure (E2) sont reliées par une partie latérale (E3).

L'ensemble de l'étrier est par exemple réalisé en tôle galvanisée découpée et pliée et présente des nervures latérales de renfort (5). La partie supérieure (E1) présente des dents (1) pour faciliter l'accrochage avec le dessus du talon de la poutrelle. En opposition, la partie inférieure (E2) présente un trou taraudé (3) pour la mise en place d'une vis autotaraudeuse (V) apte à assurer le serrage.

De manière importante, la partie latérale (E3) de l'étrier présente en débordement de sa face interne, des languettes (2) aptes à prendre appui contre le côté du talon afin de créer un espace libre pour le passage d'une tige filetée (10) engagée dans un trou taraudé (4) formée dans l'épaisseur de la partie inférieure (E2) de l'étrier. Comme indiqué, cette tige filetée (1c) est destinée à permettre la fixation des suspentes, cavaliers ou pivots ou autres accessoires appropriés à l'utilisation souhaitée.

Suivant une autre caractéristique, la partie latérale (E3) de l'étrier présente une rangée de découpes (6) pour recevoir au moins une vis de fixation d'une suspente plate. A noter également que cette partie latérale peut présenter un trou pour la fixation d'une tige à crochets.

On renvoie aux figures 6, 7 et 8 qui montrent la fixation de l'étrier sur le talon de la poutrelle au moyen de la vis (V) vissée dans le trou épaulé (3) en combinaison avec les griffes (1) qui coopèrent avec le dessus du talon.

A la figure 6, l'étrier reçoit une suspente (8) fixée au moyen d'une vis engagée dans l'un des trous (6). A la figure 7, l'étrier reçoit une tige à crochet (9) engagée dans un trou formé (11) dans l'épaisseur de la partie latérale (G3) de l'étrier. A la figure 8, une tige filetée (10) est vissée dans le trou taraudé (4), laquelle tige reçoit la fixation des suspentes, de cavaliers, pivots ou autres accessoires appropriés. A noter que cette tige filetée (10) est librement engagée dans l'espace libre résultant de l'appui des languettes (2) contre le côté du talon.

Les caractéristiques de l'étrier permettent une amplitude de variations d'épaisseur du talon des poutrelles telles qu'elles existent sur les marchés entre 38 et 45 mm environ selon les fabrications. Autrement dit, l'étrier tolère une amplitude des épaisseurs de la majorité des talons des poutrelles existant sur le marché. Il autorise une meilleure accroche de la partie haute, par la présence de dents ou griffes empêchant le glissement ou décrochage de l'étrier lorsque la vis opposée est correctement serrée. L'étrier permet l'utilisation des suspentes les plus répandues et économiques du marché ou tiges filetées.

Le dispositif selon l'invention se pose d'un seul côté, offre une amplitude tolérée, un libre choix d'emploi de suspentes plates ou tiges filetées de sorte qu'il peut être utilisé dans la majorité des cas lors d'utilisation de poutrelles béton.

## Revendications

1. Dispositif pour permettre la fixation d'ossatures plafonds ou autres accessoires sur les talons d'une poutrelle béton, comprenant un étrier (E) présentant une partie supérieure (E1) apte à coopérer avec le dessus du talon de la poutrelle et une partie inférieure (E2) apte à recevoir une vis pour le serrage et le maintien avec le dessous dudit talon, lesdites parties supérieure (E1) et inférieure (E2) étant reliées par une partie latérale (E3), la partie inférieure (E2) présentant un trou taraudé (3) pour la mise en place de ladite vis auto taraudeuse (V) apte à assurer le serrage **caractérisé en ce que** la partie inférieure (E2) présentant un deuxieme trou taraudé (4) apte à engager une tige filetée (10) et la partie latérale (E3) et la partie supérieure (E1) présentent en débordement de leur face interne des languettes (2) aptes à prendre appui contre le côté de l'un des talons de la poutrelle afin de créer un espace libre pour le passage de ladite tige filetée (10) pour la fixation de suspentes ou pivots permettant la mise en place de l'ossature.

2. Dispositif, selon la revendication 1, **caractérisé en ce que** la partie latérale (E3) présente une rangée de découpes (6) pour recevoir une vis de fixation de suspentes plates.

3. Dispositif, selon l'une quelconque des revendications 1 et 2, **caractérisé en ce que** la partie supérieure (E1) de l'étrier présente des griffes (1) qui mordent le dessus du talon de la poutrelle lors du serrage de la vis autotaraudeuse engagée dans la partie inférieure.

4. Dispositif, selon l'une quelconque des revendications 1 à 3, **caractérisé en ce que** l'étrier présente des nervures de rigidité.

5. Dispositif, selon l'une quelconque des revendications 1 à 5, **caractérisé en ce que** l'étrier autorise une amplitude permettant d'accepter les variations d'épaisseur de 38 mm à 45 mm des talons de poutrelles.

## Patentansprüche

1. Vorrichtung, um die Befestigung von Deckenkonstruktionen oder sonstigem Zubehör auf den Absätzen eines Betonträgers zu erlauben, umfassend einen Bügel (E), der einen oberen Teil (E1) aufweist, der geeignet ist, mit der Oberseite des Absatzes des Trägers zusammenzuwirken, und einen unteren Teil (E2), der geeignet ist, eine Schraube für das Einspannen und das Festhalten mit der Unterseite des genannten Absatzes aufzunehmen, wobei die genannten oberen (E1) und unteren (E2) Teile durch einen lateralen Teil (E3) verbunden sind, wobei der untere Teil (E2) ein Loch mit Gewinde (3) für das Einsetzen der genannten selbstschneidenden Schraube (V) aufweist, die geeignet ist, das Einspannen zu gewährleisten, **dadurch gekennzeichnet, dass** der untere Teil (E2), der ein zweites Loch mit Gewinde (4) aufweist, das geeignet ist, einen Gewindestift (10) eingreifen zu lassen, und der laterale Teil (E3) und der obere Teil (E1) am Überlauf ihrer internen Seite Zungen (2) aufweisen, die geeignet sind, sich gegen die Seite einer der Absätze des Trägers zu stützen, um einen freien Raum für den Durchgang des genannten Gewindestiftes (10) für die Befestigung von Hängern oder Drehzapfen zu schaffen, die das Einsetzen der Konstruktion erlauben.

2. Vorrichtung gemäß Anspruch 1, **dadurch gekennzeichnet, dass** der laterale Teil (E3) eine Reihe von Ausschnitten (6) aufweist, um eine Befestigungsschraube für flache Hänger aufzunehmen.

3. Vorrichtung gemäß Anspruch 1 und 2, **dadurch gekennzeichnet, dass** der obere Teil (E1) des Bügels Klauen (1) aufweist, die beim Einspannen der in den unteren Teil eingreifenden selbstschneidenden Schraube in die Oberseite des Absatzes des Trägers eingreifen.

4. Vorrichtung gemäß Anspruch 1 bis 3, **dadurch gekennzeichnet, dass** der Bügel Versteifungsrippungen aufweist.

5. Vorrichtung gemäß Anspruch 1 bis 5, **dadurch gekennzeichnet, dass** der Bügel eine Amplitude zulässt, die das Akzeptieren der Dickenabweichungen von 38 mm bis 45 mm der Absätze der Träger ermöglichen.

## Claims

1. Device that allows the fixing of ceiling frames or other accessories on the heels of a concrete beam, comprising a stirrup (E) that has an upper part (E1) capable of cooperating with the top of the heel of the beam and a lower part (E2) capable of receiving a screw for clamping and holding in place with the underside of the said heel, with the said upper (E1) and lower (E2) parts being connected via a lateral part (E3), and the lower part (E2) having a threaded hole (3) for inserting the said self-tapping screw (V) that is capable of ensuring the clamping, **characterised in that** the lower part (E2) has a second threaded hole (4) that is capable of receiving a screw spindle (10) and the lateral part (E3) and the upper part (E1) have tongues (2) protruding from their inner sides, which are capable of supporting themselves against the side of one of the heels of the beam in order to create a free space for the insertion of the said screw spindle (10), which is used to fix suspenders or pivots that allow setting the frame in place.

2. Device, according to claim 1, **characterised in that** the lateral part (E3) has a row of cut-outs (6) that are used to insert a retaining screw of flat suspenders.

3. Device, according to any one of the claims 1 and 2, **characterised in that** the upper part (E1) of the stirrup has claw-type clamps (1) that bite into the top of the heel of the beam when the self-tapping screw, inserted in the lower part, is tightened.

4. Device, according to any one of the claims 1 to 3, **characterised in that** the stirrup has reinforcing ribs.

5. Device, according to any one of the claims 1 to 5, **characterised in that** the stirrup permits a range that accepts variations in the thickness of the beam heels from 38 mm to 45 mm.
